# EUROPÄISCHE PATENTSCHRIFT

(11) **EP 0 848 208 B1**
(45) Veröffentlichungstag und Bekanntmachung des Hinweises auf die Patenterteilung: **16.06.2004**
(21) Anmeldenummer: 97810930.4
(22) Anmeldetag: 01.12.1997
(51) Int. Cl.: F22B 37/32, F22B 37/48

(54) **Reinigung des Wasser-Dampfkreislaufs in einem Zwangsdurchlaufdampferzeuger**
Purification of a water-steam cycle in an once-through steam generator
Purification du cycle eau-vapeur dans une chaudière à passage unique

(30) Priorität: 13.12.1996 DE 19651966
(43) Veröffentlichungstag der Anmeldung: 17.06.1998
(73) Patentinhaber: ALSTOM Technology Ltd, 5400 Baden (CH)
(72) Erfinder: Kamberger, Werner, 8472 Ohringen (CH); Liebig, Erhard, Dr., 71254 Ditzingen (DE)

(56) Entgegenhaltungen:
- EP-A- 0 090 264
- EP-A- 0 090 335
- DE-A- 2 032 199
- DE-A- 4 140 788
- GB-A- 691 324

## Beschreibung

### Technisches Gebiet

Die Erfindung betrifft eine Einrichtung zum Reinigen des Wasser-Dampfkreislaufs eines Zwangsdurchlaufdampferzeugers, im wesentlichen bestehend aus einem Economiser, einem Verdampfer und einem Überhitzer, wobei dampfseitig zwischen dem Verdampfer und dem Überhitzer eine Abscheideflasche geschaltet ist.

### Stand der Technik

Solche Zwangsdurchlaufdampferzeuger finden u.a. Anwendung in kombinierten Gas-Dampf-Kraftwerksanlagen, welche einen Gasturbinenkreislauf und einen Dampfturbinenkreislauf aufweisen, wobei die Abgase einer Gasturbine ihre Restwärme über das in einem Zwangsdurchlaufdampferzeuger strömende Arbeitsmittel an eine Dampfturbine abgeben.

Dokument GB-A-691 324 offenbart einen Separator bzw. einen zyklonabscheider für ein Dampf-/Wasser-Gemisch. Die Einleitung des zu trennenden Gemischs erfolgt tangential in meheren Ebenen.

Abhitzekessel zur Nutzung der Abwärme von Gasturbinenanlagen werden in der Regel mit Trommelkesseln ausgeführt. Die Reinigung des Wasser-Dampfkreislaufes erfolgt über die Aufkonzentration in der jeweiligen Trommel und eine kontinuierliche oder diskontinuierliche Absalzung der Trommel.

Sind die Abhitzekessel indes mit einem Zwangsdurchlaufkessel versehen, so entfällt dieser Reinigungsmechnismus. Die Reinigung des Wasser-Dampfkreislaufes wird in diesem Fall in einer Kondensatreinigungsanlage vollzogen.

Zum Reinigen des Wasser-Dampfkreislaufs eines Zwangsdurchlaufkessels der eingangs genannten Art kann während des Betriebes über die Speisepumpe eine grössere Menge Wasser als erforderlich durch den Economiser und den Verdampfer gefördert werden. Diese Wassermenge ist dann so bemessen, dass Nassdampf in die Abscheideflasche gelangt. Der Wasseranteil des Dampfes mit allen darin enthaltenen Verunreinigungen wird in der Abscheideflasche separiert und über eine Absalzleitung abgezogen. Von Vorteil bei diesem Verfahren ist, dass der Kreislauf bereits nach wenigen Durchläufen, d.h. innert kürzester Zeit, weitgehend von Verunreinigungen befreit ist. Eine solche Anlage kann somit ohne Kondensatreinigungsanlage auskommen, was unter anderem zu einer beträchtlichen Senkung der Anlagen- und der Betriebskosten führt sowie zu einer Risikoverminderung infolge Fehlens einer chemischen Anlage im Wasser-Dampfkreislauf.

### Darstellung der Erfindung

Der Erfindung liegt die Aufgabe zugrunde, eine Einrichtung der eingangs genannten Art zu schaffen, mit welcher neben einer Verhinderung von Wasserdurchbrüchen eine Feuchteabscheidung mit möglichst hohem Wirkungsgrad sowie eine Reinigung des Arbeitsmittels von Verunreinigungen, erzielt werden kann.

Erfindungsgemäss wird dies durch eine Einrichtung gemäß Anspruch 1 erreicht. Die Vorteile der Erfindung sind unter anderem darin zu sehen, dass sich die (später zu beschreibenden) Verteilkoeffizienten von Verunreinigungen den unter stationären Bedingungen erreichbaren Idealwerten nähern. Die Reinigung des Wasser/Dampf-Kreislaufes ist entsprechend der festgestellten Verunreinigung bei optimalen Drücken, Feuchten und Absalzraten durchführbar. Dabei wird eine hohe Effizienz der Reinigung bei geringsten Wasser- und Wärmeverlusten erzielt.

### Kurze Beschreibung der Zeichnung

In der Zeichnung ist ein Ausführungsbeispiel der Erfindung dargestellt. Es sind nur die für das Verständnis der Erfindung wesentlichen Elemente gezeigt. Die Strömungsrichtung der Arbeitsmittel ist mit Pfeilen dargestellt.
Es zeigen:
- Fig. 1: das Schema einer kombinierten Gas/Dampfturbinen-Kraftwerksanlage;
- Fig. 2: eine Abscheideflasche im Längsschnitt;
- Fig. 3: die Abscheideflasche nach Fig. 2 im Querschnitt.

### Weg zur Ausführung der Erfindung

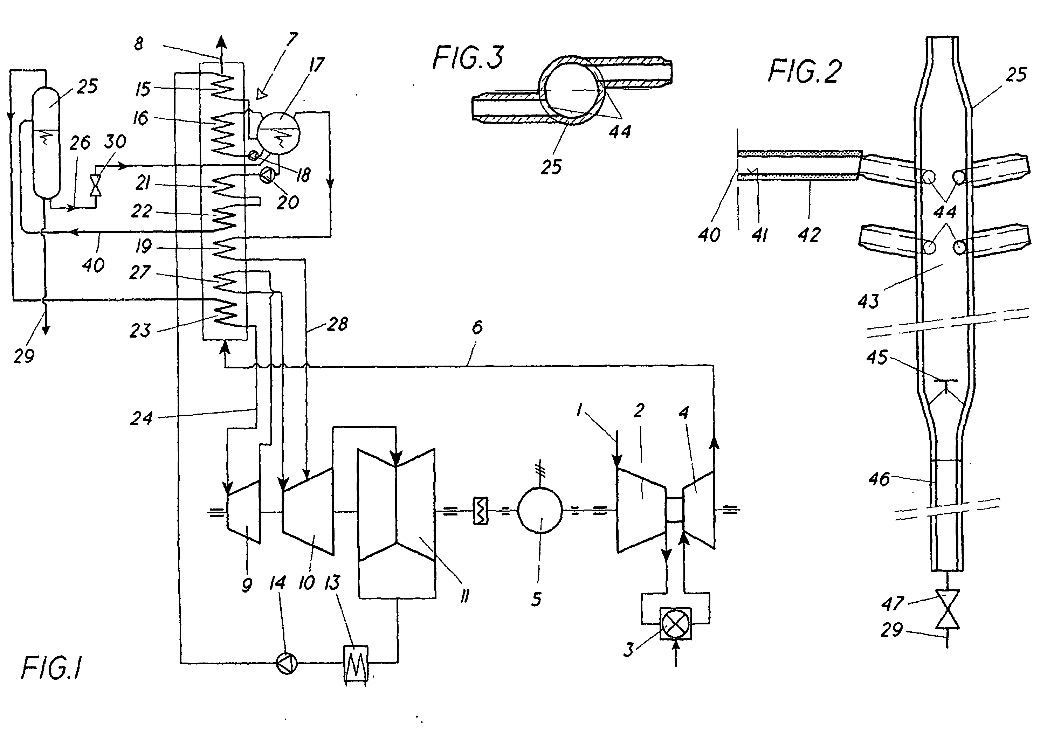

Gemäss Figur 1 wird im Gasturbinensystem über eine Leitung 1 angesaugte Frischluft in einem Verdichter 2 auf den Arbeitsdruck verdichtet. Die verdichtete Luft wird in einer beispielsweise mit Erdgas befeuerten Brennkammer 3 stark erhitzt und das so entstandene Brenngas wird in einer Gasturbine 4 arbeitsleistend entspannt. Die dabei gewonnene Energie wird an einen Generator 5 bzw. den Verdichter 2 abgegeben. Das noch heisse Abgas der Gasturbine wird über eine Leitung 6 vom Ausgang der Gasturbine einer Abhitzedampferzeugungsanlage 7 zugeführt und daraus nach Abgabe seiner Wärme über eine Leitung 8 und einen nicht dargestellten Kamin ins Freie geleitet.

Im Wasser-Dampfkreislauf ist eine mehrgehäusige Dampfturbine 9, 10 und 11 auf der gleichen Welle mit der Gasturbine angeordnet. Der in der Niederdruckturbine 11 entspannte Arbeitsdampf kondensiert in einem Kondensator 13. Das Kondensat wird mittels einer Kondensatpumpe 14 direkt in den Dampferzeuger 7 gefördert. Bemerkenswert ist, dass die Anlage keinen Speisewasserbehälter/Entgaser aufweist.

Die Abhitzedampferzeugungsanlage 7 ist als stehender Kessel ausgeführt und arbeitet im vorliegenden Fall nach einem Zweidruck-Dampfprozess. Selbstverständlich könnte auch ein liegender Kessel zur Anwendung gelangen.

Das Niederdrucksystem ist als Umlaufssystem mit Trommel ausgeführt, wobei hier ein Zwangsumlaufsystem gewählt worden ist. Es besteht im Rauchgasweg des Kessels aus einem Niederdruckeconomiser 15, in den das Kondensat eingeleitet wird, einem Niederdruckverdampfer 16 und einem Niederdrucküberhitzer 19. Der Niederdruckverdampfer ist über eine Umwälzpumpe 18 mit einer Trommel 17 verbunden. Der überhitzte Dampf wird über eine Niederdruck-Dampfleitung 28 in eine geeignete Stufe der Mitteldruck-Dampfturbine 10 überführt.

Das Hochdrucksystem ist als Zwangsdurchlaufsystem ausgeführt und damit sowohl für unterkritische als auch für überkritische Parameter auslegbar. Es besteht im Rauchgasweg des Kessels im wesentlichen aus dem Hochdruckeconomiser 21, dem Hochdruckverdampfer 22 und dem Hochdrucküberhitzer 23. Dem Hochdruckeconomiser 21 wird das Arbeitsmittel über eine Hochdruckspeisepumpe 20 aus der Niederdrucktrommel 17 zugeführt. Auf diese Weise kann der bisher übliche Speisewasserbehälter entfallen. Der überhitzte Dampf wird über eine Frischdampfleitung 24 in den Hochdruckteil 9 der Dampfturbine überführt.

Nach der Teilentspannung im Hochdruckteil 9 der Turbine wird der Dampf vor der Überleitung in die Mitteldruckturbine 10 zwischenüberhitzt. Diese Zwischenüberhitzung erfolgt im Beispielsfall in Wärmetauschflächen 27, welche im Rauchgasweg des Dampferzeugers oberhalb des Hochdrucküberhitzers 23 angeordnet sind.

Zur Phasentrennung ist im Dampferzeugersystem eine Abscheideflasche 25 vorgesehen, in welche der Austritt des Hochdruckverdampfers 22 mündet. Die Abscheideflasche ist an ihrem oberen Ende mit dem Hochdrucküberhitzer 23 verbunden. An ihrem unteren Ende ist sie mit einer Absalzleitung 29 versehen. Vom unteren Ende der Abscheideflasche geht ebenfalls eine Rezirkulationsleitung 26 ab, welche ein Absperrorgan 30 enthält und in die Niederdrucktrommel 17 mündet.

Diese Abscheideflasche 25 sorgt zum einen dafür, dass der Hochdrucküberhitzer jederzeit trocken bleibt und am Kesselaustritt frühzeitig überhitzter Dampf zur Verfügung steht. Sobald im Hochdruckverdampfer der für einen stabilen Betrieb notwendige Druck erreicht ist, kann der Frischdampf zum Anfahren der Dampfturbine im Gleitdruckbetrieb verwendet werden.

Zum andern wird die Abscheideflasche 25 dazu benutzt, die Verunreinigungen aus dem Dampf/Wasserkreislauf abzuziehen.

Die Reinigung des Dampf/Wasserkreislaufes kann sowohl bei Vollast als auch bei Teillast erfolgen. Dazu wird das Hochdrucksystem überspeist, d.h. es wird über die Hochdruckspeisepumpe eine grössere Menge Wasser als erforderlich durch den Zwangsdurchlauf-Dampferzeuger gefördert. Die geförderte Wassermenge wird so eingestellt, dass auf jeden Fall Nassdampf in die Flasche gelangt. In der Flasche wird der Wasseranteil des Dampfes durch geeignete Mittel separiert und über die Absalzleitung 29 abgezogen.

Diesem Verfahren liegen folgende Überlegungen zugrunde: Im Verlaufe des Verdampfungsvorganges findet zwischen Eintritt und Austritt des Verdampfers - entsprechend dem Dampfgehalt und dem Verteilkoeffizienten - eine Aufkonzentration der Verunreinigungen im Wasser statt. Der Verteilkoeffizient ist definiert als das Verhältnis der Konzentration der Verunreinigungen in der Dampfphase zu demjenigen in der Wasserphase am Eintritt in die Abscheideflasche. Dieses Verhältnis ist stark abhängig vom Druck, von der Dynamik des Verdampfungsvorganges, d.h. der Möglichkeit der Einstellung chemischer Gleichgewichte sowie von den Verunreinigungen selbst. Mit steigendem Druck nimmt der Zahlenwert des Verteilkoeffizienten zu, d.h. die Aufkonzentration im Wasser geht zurück. Die Anreicherung von Silikaten ist generell schlechter als die von Salzen.

Die am Austritt der Abscheideflasche erzielbare Dampfreinheit ist nunmehr abhängig von diesem Verteilkoeffizient und der Absalzrate. Je kleiner der Verteilkoeffizient ist und damit der Druck am Abscheider, desto besser wird die Dampfreinheit und umgekehrt. Bei grossem Verteilkoeffizienten, also bei hohem Druck, bringt eine Vergrösserung der Absalzrate eine Verbesserung der Dampfreinheit, wobei der hydraulische Wirkungsgrad des Abscheiders keine Rolle spielt. Bei kleinem Verteilkoeffizienten und damit tiefem Druck ergibt die Vergrösserung der Absalzrate über 10% keine Verbesserung der Dampfreinheit mehr. Hingegen wird die Dampfreinheit bei Verbesserung des hydraulischen Abscheidegrades erhöht.

Für kleine Dampfnässen am Eintritt der Abscheideflasche, wie dies im vorliegenden Fall ist, gelten folgende Betrachtungen: Die für die Abscheidung ausschlaggebende Struktur des Dampf-Wasser-Gemisches am Austritt des Verdampfers hat sich unter dem Einfluss der Beheizung/Verdampfung gebildet. Eine unvollständige Verdampfung mit Restfeuchten von 0 bis 25% kann durch die Anwesenheit eines Abscheiders in der Endzone der Verdampfung, die Überspeisung des Systemes bei gleicher Wärmeleistung oder die Verkleinerung der Wärmeleistung bei gleicher Speisung verwirklicht werden. Man hat damit ein Mittel in der Hand, die Restfeuchte optimal einzustellen. In der Endzone der Verdampfung werden dann die mit dem Speisewasser eingebrachten Verunreingungen teilweise gasförmig, zum Teil als feste oder geschmolzene Verunreingungspartikel und schliesslich in den Wassertröpfchen sowie in dem längs der Rohrwand mitgerissenen Wasserfilm in gelöster Form vorliegen.

Die einzelnen Wassertröpfchen werden infolge Zerspringens beim Auftreffen auf die bereits leicht überhitzte Wandung des Rohrsystems sehr fein sein. Wegen der fortschreitenden Verdampfung wird der Gehalt an Verunreinigungen der kleineren Tröpfchen im Mittel grösser sein als jener der grösseren Tröpfchen. Auch werden bereits auskristallisierte Verunreingungen in feinster Form vom Dampf mitgeführt. Ein derartiges Tropfengemisch eignet sich seiner Feinheit und Konzentrationsunterschiede schlecht für eine effiziente Abscheidung und muss vor seinem Eintritt in die Abscheideflasche umgeformt., d.h. homogenisiert werden.

Diese Umformung erfolgt in dem zwischen Verdampfer und Abscheideflasche angeordneten unbeheizten und ungekühlten Rohrsystem 40, welches zu diesem Zweck wärmeisoliert (42, Fig. 2) ist.

Bezüglich dieser Umformung ist für eine ausreichende Turbulenz im Rohrsystem 40 zu sorgen. Dies kann zum einen durch speziell angeordnete Turbulenzerzeuger erfolgen, zum andern durch entsprechende Konfiguration des Rohrsystems selbst, bspw. durch Anordnung von turbulenzerzeugenden Umlenkungen. Die Krümmer sowie die horizontalen und vertikalen Rohrabschnitte sind hinsichtlich des gewünschten Turbulenzgrades zu gestalten. Hierbei hat es sich als vorteilhaft gezeigt, wenn die vertikalen Rohrabschnitte von unten nach oben durchströmt werden. Die Turbulenzerzeugung hat den Zweck, den Wärme- und Stoffaustausch durch Verwirbelung in der Dampfphase und/oder durch Vermeidung von laminaren Strömungsverhältnissen im Wandfilm zwischen der Wasser- und der Dampfphase zu optimieren.

In diesem entsprechend konfiguriertem Rohrsystem 40 schlagen sich infolge der Turbulenz die Tröpfchen an der Rohrwand (41, Fig.2) nieder. Sie bilden an der Rohrwand einen sich gegenüber der Dampfströmung nur sehr viel langsamer bewegenden Wasserfilm, der sich gelegentlich aufstaut, auslappt und von neuem in Tropfen zerrissen wird. Durch diese stete neue Durchmischung und Neubildung der Tropfen ohne Kühlung resp. Beheizung werden die bereits auskristallisierten Verunreingungen wieder gelöst und alle Tropfen, ungeachtet ihrer Grösse, werden auf die gleiche Verunreingungskonzentration gebracht. Dies gilt natürlich nur für Verunreingungen, deren Löslichkeitskeitsgrenze dabei nicht überschritten wird, was jedoch in der Regel bei normalen Betriebsbedingungen zutrifft.

Gemäss Fig. 2 besteht die Einrichtung zum Separieren der Phasen im wesentlichen aus einer als Fliehkraftabscheider ausgebildeten, vertikal angeordneten Abscheideflasche 25. Die Flasche ist selbstverständlich wärmeisoliert (nicht dargestellt). Wesentlich ist, dass das in die Flasche mündende Rohrsystem 40 mit einer sehr wirksamen Wärmeisolation 42 versehen ist.

Gemäss Fig. 3 ist die Flasche von vorzugsweise zylindrischer Form. Im Bereich des Dampfraumes 43 ist sie zur Drallerzeugung mit tangentialen Dampfeintrittsöffnungen 44 versehen. Im vorliegenden Fall sind je zwei um 180° gegeneinander versetzte Dampfeintrittsöffnungen in zwei übereinanderliegenden Ebenen vorgesehen. Als vorteilhaft hat sich eine Dampfeintrittsgeschwingigkeit von ca 16-20 m/sec ergeben. Die die Dampfeintrittsöffnungen bildenden Rohrstutzen sind in einem flachen Winkel zur Horizontalen angeordnet. Zur Erlangung einer abwärts gerichteten Drallströmung hat sich ein Winkel von ca. 5° als günstig erwiesen.

Am unteren Ende des Dampfraumes 43 ist eine Wirbelstützplatte mit geeigneten Mitteln an der Flasche befestigt. Der sich im Separator infolge der tangentialen und schrägen Zuströmung ausbildende Wirbel steht mit seiner Wirbelspitze auf dieser Platte. Damit wird verhindert, dass der Wirbel in das Abflussrohr gelangt. Dieses Abflussrohr 46 ist mit einer nicht gezeigten Wasserstandsregelung und einer Probeentnahme ausgerüstet. An seinem unteren Ende ist das Abflussrohr am Übergang zur Absalzleitung 29 mit einem Absalzventil 47 versehen.

Durch die Geometrie des Separators hinsichtlich spezifischer Separatorbelastung und die Ausbildung als Fliehkraftabscheider lassen sich bei geeigneter Wahl von Geschwindigkeit und Strömungsform auch bei höchsten unterkritischen Drücken ausgezeichnete Abscheidegrade erreichen.

### Bezugszeichenliste

- 1: Frischluftleitung
- 2: Verdichter
- 3: Brennkammer
- 4: Gasturbine
- 5: Generator
- 6: Abgasleitung zum Dampferzeuger
- 7: Abhitzedampferzeugungsanlage
- 8: Abgasleitung zum Kamin
- 9: Hochdruckdampfturbine
- 10: Mitteldruckdampfturbine
- 11: Niederdruckdampfturbine
- 13: Kondensator
- 14: Kondensatpumpe
- 15: Niederdruckeconomiser
- 16: Niederdruckverdampfer
- 17: Niederdrucktrommel
- 18: Umwälzpumpe
- 19: Niederdrucküberhitzer
- 20: Speisewasserpumpe
- 21: Hochdruckeconomiser
- 22: Hochdruckverdampfer
- 23: Hochdrucküberhitzer
- 24: Frischdampfleitung
- 25: Abscheideflasche
- 26: Rezirkulationsleitung
- 27: Zwischenüberhitzer
- 28: Niederdruck-Dampfleitung
- 29: Absalzleitung
- 30: Absperrorgan

- 40: Rohrsystem
- 41: Rohrwand
- 42: Isolierung
- 43: Dampfraum
- 44: Dampfeintrittsöffnung
- 45: Wirbelstützplatte
- 46: Abflussrohr
- 47: Absalzventil

## Patentansprüche

1. Einrichtung zum Reinigen *des Arbeitsmittels* des Wasser-Dampfkreislaufs eines Zwangsdurchlaufdampferzeugers *von Verunreinigungen*, *welcher Zwangsdurchlaufdampferzeuger* im wesentlichen besteht aus einem Economiser (21), einem Verdampfer (22) und einem Überhitzer (23), wobei zwischen den Verdampfer (22) und den Überhitzer (23) eine Abscheideflasche (25) geschaltet ist, *welche* Abscheideflasche (25) als Fliehkraftabscheider ausgebildet ist, wozu ihre Innenkammer im Bereich des Dampfraumes (43) mit *Dampfzuströmleitungen (40)* versehen ist, *welche* in tangentialen Dampfeintrittsöffnungen (44) in die Innenkammer *münden*,
**dadurch gekennzeichnet, dass**
die Dampfzuströmleitungen (40) zur Abscheideflasche (25) mit turbulenzerzeugenden Mitteln ausgerüstet sind.

2. Einrichtung nach Anspruch 1, **dadurch gekennzeichnet, dass** die Dampfeintrittsöffnungen (44) in mehreren Ebenen im Dampfraum (43) der Abscheideflasche (25) angeordnet sind.

3. Einrichtung nach Anspruch 1, **dadurch gekennzeichnet, dass** am unteren Ende des Dampfraumes (43) eine Wirbelstützplatte (45) angeordnet ist.

4. Einrichtung nach Anspruch 1, **dadurch gekennzeichnet, dass** die Dampfzuströmleitungen (40) zur Abscheideflasche (25) mit einer Wärmeisolierung (42) versehen ist.

## Claims

1. Device for cleaning impurities from the working medium of the water/steam circuit of a once-through steam generator, essentially composed of an economizer (21), of an evaporator (22) and of a superheater (23), a separation bottle (25) being inserted between the evaporator (22) and superheater (23), which separation bottle (25) is designed as a centrifugal separator, for which purpose its inner chamber is provided with steam inflow lines (40) in the region of the steam space (43), which steam inflow lines (40) in tangential steam inlet orifices (44) open into the internal chamber,
**characterized in that**
the steam inflow lines (40) to the separation bottle (25) are equipped with turbulence-generating means.

2. Device according to Claim 1, **characterized in that** the steam inlet orifices (44) are arranged in a plurality of planes in the steam space (43) of the separation bottle (25).

3. Device according to Claim 1, **characterized in that** a vortex support plate (45) is arranged at the lower end of the steam space (43).

4. Device according to Claim 1, **characterized in that** the steam inflow line (40) to the separation bottle (25) is provided with thermal insulation (42).

## Revendications

1. Dispositif pour le nettoyage du fluide de travail du circuit eau-vapeur d'un générateur de vapeur à circulation forcée, de ses impuretés, lequel générateur de vapeur à circulation forcée se compose essentiellement d'un économiseur (21), d'un évaporateur (22) et d'un surchauffeur (23), une bouteille de séparation (25) étant installée entre l'évaporateur (22) et le surchauffeur (23), laquelle bouteille de séparation (25) est réalisée sous forme de séparateur centrifuge, ce pour quoi sa chambre interne est pourvue dans la région de l'espace vapeur (43) de conduites d'amenée de vapeur (40) qui débouchent dans des ouvertures d'entrée de vapeur tangentielles (44) dans la chambre interne,
**caractérisé en ce que**
les conduites d'amenée de vapeur (40) à la bouteille de séparation (25) sont équipées de moyens de génération de turbulences.

2. Dispositif selon la revendication 1, **caractérisé en ce que** les ouvertures d'entrée de vapeur (44) sont disposées dans plusieurs plans dans l'espace vapeur (43) de la bouteille de séparation (25).

3. Dispositif selon la revendication 1, **caractérisé en ce que** l'on prévoit à l'extrémité inférieure de l'espace vapeur (43) une plaque de support de tourbillons (45).

4. Dispositif selon la revendication 1, **caractérisé en ce que** les conduite d'amenée de vapeur (40) à la bouteille de séparation (25) sont pourvues d'une isolation thermique (42).
